# EUROPEAN PATENT APPLICATION

(11) **EP 2 832 447 A1**
(43) Date of publication of application: **04.02.2015**
(21) Application number: 13768112.8
(22) Date of filing: 22.03.2013
(51) Int. Cl.: B01J 35/04, B01D 53/94, B01J 27/224, C04B 35/584, C04B 38/00, C04B 41/85, C04B 41/89, F01N 3/021, F01N 3/023, F01N 3/035, F01N 3/28

(54) **CERAMIC FILTER**

(30) Priority: 29.03.2012 JP 2012075708
(71) Applicant: Kubota Corporation, Osaka-shi, Osaka 556-8601 (JP); National Institute Of Advanced Industrial Science, Tokyo 100-8921 (JP)
(72) Inventor: OKANO, Hiroaki, Hirakata-shi Osaka 573-8573 (JP); YAMAGUCHI, Hiroshi, Hirakata-shi Osaka 573-8573 (JP); KATAYAMA, Risa, Hirakata-shi Osaka 573-8573 (JP); OBUCHI, Akira, Tsukuba-shi Ibaraki 305-8569 (JP); UCHIZAWA, Junko, Tsukuba-shi Ibaraki 305-8569 (JP); NAMBA, Tetsuya, Tsukuba-shi Ibaraki 305-8569 (JP)
(74) Representative: Müller-Boré & Partner Patentanwälte PartG mbB
(86) International application number: PCT/JP2013/058319
(87) International publication number: WO 2013/146594

(57) **Abstract**

A ceramic filter includes a porous ceramic body (1) which is a sintered body of ceramic particles (1a), and a coating portion (2) formed on a surface of each ceramic particle to support the catalyst. The porous ceramic body (1) has a specific surface area equal to or greater than 0.5 m²/cc, measured by a mercury porosimeter, and an amount of the coating portion (2) is equal to or greater than 15g/l.

## Description

### Field of the Invention

The present invention relates to a ceramic filter for capturing solid fine particles contained in an exhaust gas from an internal combustion engine and the like.

### Background of the Invention

Conventionally, a honeycomb filter having a large number of cells extending in a given direction is used as a filter for capturing solid fine particles contained in an exhaust gas from an internal combustion engine. A surface of such a honeycomb filter is coated with a coating material such as alumina by wash-coating in order to support a catalyst, such as platinum (Pt), which oxidatively decomposes the captured solid fine particles, carbon monoxide (CO), and the like.

On the other hand, Patent Document 1 and Patent Document 2 disclose methods for forming a layer for carrying a catalyst without using wash-coating. More specifically,

Patent Document 1 describes a technology in which an oxide film of silicide is formed by heating at 1000 °C to 1500 °C, and then the silicide oxide film surface is coated with a metal compound containing aluminum. Patent Document 2 describes a technology in which an alumina thin film is formed on a surface of each particle constituting a ceramic support by coating the surface with a metal compound containing aluminum and conducting a heating process, where the ceramic support contains tetravalent metal acid insoluble salts, such as zirconium phosphate.

### Prior Art References

### Patent Documents

Patent Document 1: Japanese Patent No. 4642955 (issued on March 2, 2011)
Patent Document 2: Japanese Patent No. 4498579 (issued on July 7, 2010)

### Summary of the invention

### Problems to be Solved by the Invention

A catalyst such as platinum used under a high temperature is subject to gradual sintering (agglomeration) which degrades the catalyst function. In order to solve this problem, a coating amount of a coating material for wash-coating may be increased while reducing a deposition ratio of the catalyst, so as to increase the dispersion of the coating material. However, in the conventional ceramic using wash coating, if the amount of coating material is increased, it will block pores of the ceramic so as to increase a pressure loss. This prevents the coating amount from being increased and thus the dispersibility of the catalyst cannot be increased.

Although Patent Documents 1 and 2 describe the methods which do not use wash-coating, they do not mention about forming a large amount of a layer for supporting the catalyst, and thus the dispersion of the catalyst cannot be sufficiently increased.

In the light of the forgoing, the present invention is to realize a ceramic filter that can increase the dispersion of the catalyst.

### Means for Solving the Problems

In order to solve the above-mentioned problems, a ceramic filter in accordance with the present invention includes a porous ceramic body which is a sintered body of ceramic particles and a coating portion formed on a surface of each of the ceramic particles to support a catalyst, wherein the porous ceramic body has a specific surface area equal to or greater than 0.5 m²/cc measured by a mercury porosimeter, and an amount of the coating portion is equal to or greater than 15g/l.

### Effect of the invention

In accordance with the present invention, the dispersion of the catalyst is advantageously increased.

### Brief Description of the Drawings

FIG. 1 is a schematic diagram showing a ceramic filter in accordance with one embodiment of the present invention.
FIG. 2 is a schematic diagram showing a ceramic filter as a comparative example.
FIG. 3 is an electron micrograph of a porous ceramic body of the ceramic filter in accordance with one embodiment of the present invention.
FIG. 4 is an electron micrograph of a porous ceramic body of the ceramic filter in the comparative example.
FIG. 5 is a diagram showing a measurement result of a pore diameter distribution for the porous ceramic body in the embodiments of the present invention.
FIG. 6 is a diagram showing a measurement result of a pore diameter distribution in the porous ceramic body in the comparative examples.
FIGS. 7A- 7F are electron micrographs or EDX maps of the embodiment of the present invention or the comparative example: FIG. 7A is an electron micrograph of Embodiment 2; FIG. 7B is an EDX map for element Al in Embodiment 2; FIG. 7C is an electron micrograph of Embodiment 4; FIG. 7D is an EDX map for element Al in Embodiment 4; FIG. 7E is an electron micrograph of Comparative Example 1; and FIG. 7F is an EDX map for element Al in Comparative Example 1.
FIG. 8 is a schematic diagram showing a testing apparatus for measuring changes in a pressure loss.

### Description of Embodiments of The Present Invention

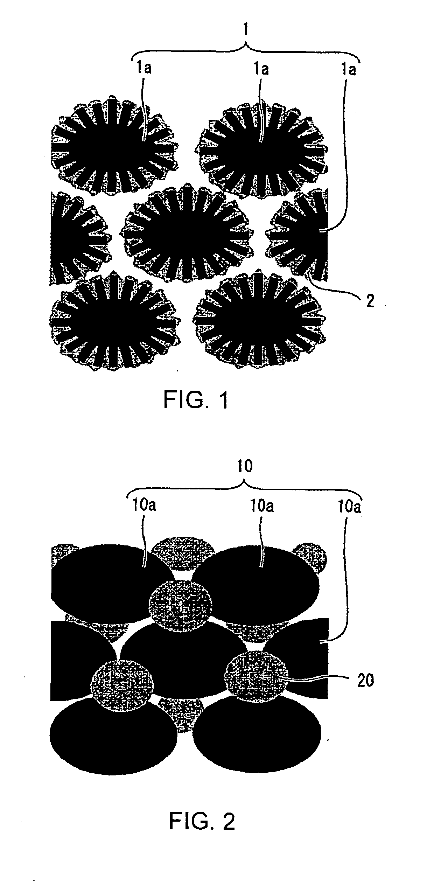

Embodiments of the present invention will be explained in detail below. FIG. 1 is a schematic diagram showing a ceramic filter in accordance with one embodiment of the present invention. As shown in FIG. 1, the ceramic filter includes a porous ceramic body 1 which is a sintered body of ceramic particles 1a, and a coating portion 2 formed on a surface of each of the ceramic particles 1a to support a catalyst.

The porous ceramic body 1 has a specific surface area equal to or greater than 0.5 m²/cc measured by a mercury porosimeter. Since the specific surface area is equal to or greater than 0.5 m²/cc, an area for forming the coating portion 2 per unit area is increased. The catalyst is dispersedly supported by the coating portion 2 which is formed on a larger area per unit area. As a result, the degree of dispersion of the catalyst can be increased.

FIG. 2 is a schematic diagram showing a ceramic filter in accordance with a comparative example. As shown in FIG. 2, the ceramic filter of the comparative example has a porous ceramic body 10 which is a sintered body of ceramic particles 10a, and a coating portion 20 formed between the ceramic particles 10a to support a catalyst. The specific surface area of the porous ceramic body 10 is about 0.2 m²/cc, and most of the pores are large pores disposed between the ceramic particles 10a and have a relatively large pore diameter. Accordingly, the coating portion 20 is formed in such a manner that blocks the pores, thereby elevating the increase rate of the pressure loss due to the formation of the coating portion 20. In addition, since the coating portion 20 is mostly disposed onto the large pores and thus tends to agglomerate, the dispersion of the catalyst supported by the coating portion 20 is also reduced, degrading the catalytic performance.

On the other hand, the ceramic filter in accordance with an embodiment of the present invention includes a porous ceramic body 1 that has a specific surface area equal to or greater than 0.5 m²/cc, as shown in FIG. 1. Because of this, the surface area of the coating portion 2 per unit volume can be increased so as to maintain a high degree of dispersion of the catalyst, improving the catalytic performance.

In addition, as will be described below, when the porous ceramic body 1 is formed of columnar crystals, as shown in FIG. 1, the porous ceramic body 1 includes numerous minute pores in addition to the large pores formed between ceramic particles 1a which have a relatively large pore diameter.

Accordingly, the coating portion 2 for supporting the catalyst is formed dispersedly over the surface of the ceramic particle by filing the minute pores. As a result, the catalyst supported by the coating portion 2 is also dispersed, thereby increasing the surface area of the catalyst as a whole and improving the catalytic performance.

In addition, the coating portion 2 is tend to fill the minute pores and thus less likely to block the large pores. Because of this, the increase rate of the pressure loss due to the formation of the coating portion 2 can be suppressed to a low level. Thus, an amount of the coating portion 2 can be increased so as to further improve the dispersion of the catalyst supported by the coating portion 2.

It is preferable that, in the porous ceramic body 1, the pores having a pore diameter equal to or smaller than 10µm are equal to or greater than 10% of the entire pores. By this, the coating portion 2 can be placed to small pores with the diameter equal to or smaller than 10 µm, so as to further prevent the increase of the pressure loss due to clogging of the large pores.

It is preferable that, in the porous ceramic body 1, the pores having a pore diameter equal to or smaller than 10µm are equal to or smaller than 50% of the entire pores. If the pores having the diameter equal to or less than 10 µm exceed 50% of the entire pores, the strength of the ceramic filter is reduced.

A preferable material for the porous ceramic body 1 is β-type silicon nitride (Si₃N₄) series ceramic. Silicon nitride series ceramic is in a form of a polycrystalline body which is mostly composed of silicon nitride, and it may contain a sintering aid such as Y₂O₃ or MgO. Silicon nitride series ceramic also includes sialon in which part of silicon and part of nitride in silicon nitride have been replaced by aluminum and oxygen, respectively.

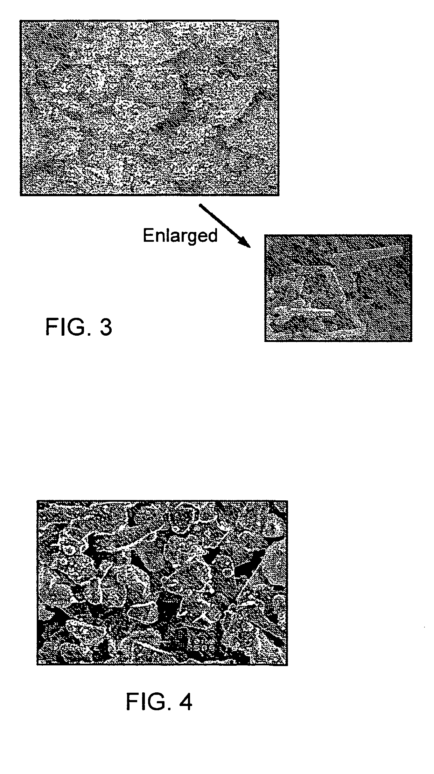

FIG. 3 is an electron micrograph of β-type silicon nitride series ceramic. As shown in FIG. 3, β-type silicon nitride series ceramic is formed of hexagonal system columnar crystals, and the porous ceramic particle 1 a is formed of crystalline lumps which are masses of columnar crystals, in which numerous crystalline lumps are combined to each other. Being formed of such columnar crystals, the porous ceramic body 1 can have a specific surface area equal to or greater than 0.5 m²/cc. In addition, small pores can be formed between the columnar crystals, as well as large pores between crystalline lumps.

On the other hand, FIG. 4 is an electron micrograph of a porous ceramic body of a ceramic filter in accordance with a comparative example to the present invention. The porous ceramic body shown in FIG. 4 is formed of silicon carbide (SiC) ceramic and has a specific surface area smaller than 0.5 m²/cc. As shown in FIG. 4, there are only large pores between ceramic particles, lacking minute pores such as that shown in FIG. 3. As a result, the coating portion is disposed onto large pores between ceramic particles, and thus it is understood that air ventilation is worsened and the dispersion of the coating portion is reduced.

The coating portion 2 is formed to have an amount equal to or greater than 15g/l. The amount of the coating portion 2 is a weight thereof with respect to an apparent volume of the entire ceramic filter including air passages and pores through which an exhaust gas flows. For example, in a honeycomb type ceramic filter, which has a number of cells extending in an axis direction and arranged to from a lattice in a cross-section perpendicular to the axis direction at both ends, where the lattice includes alternately arranged open ends and closed ends of the cells, the amount of the coating portion is the weight thereof with respect to the apparent volume including the cells and pores which constitute air passages. By providing the amount of the coating portion equal to or greater than 15g/l, the dispersion of the catalyst is further improved, thereby hindering agglomeration of the catalyst caused by the use under a high temperature, and prolonging the catalyst performance for a long period of time.

However, it is preferable that the increase rate of the pressure loss of the porous ceramic body 1 due to the formation of the coating portion 2 is equal to or less than 20%. This is because the air ventilation characteristic of the ceramic filter would be reduced if the amount of the coating portion 2 is so increased that the increase rate of the pressure loss exceeds 20%.

The material of the coating portion 2 has metal oxide as a major component, and it is preferable to contain at least one of aluminum oxide, titanium oxide, zirconium oxide, silicon oxide, cerium oxide, and lanthanum oxide. The catalyst is supported by these elements.

### < Method of Manufacturing>

### < Method for Manufacturing the Porous Ceramic Body>

Next, a method for manufacturing the ceramic filter shown in FIG. 1 is explained. First, a method for manufacturing the porous ceramic body 1 is explained. There are two types of methods to manufacture the porous ceramic body 1: a pressureless sintering in which a source powder material having the same composition as the porous ceramic body 1 is sintered with a sintering aid, and a post reaction sintering in which a source powder material of metallic Si is nitrided with a proper amount of a sintering aid and a pore-forming agent in a first firing step, and then densified by a second firing step.

### <Pressureless Sintering>

The porous ceramic body 1 is formed by the following process steps in the pressureless sintering.
(1) Source materials including the source powder material and the sintering aid are measured and mixed.
(2) The mixed material is formed into a predetermined shape (for example, a honeycomb-shaped cylinder having φ144 mm x 150 mm) by extrusion molding. Here, the honeycomb-shaped cylinder means a honeycomb body in which a number of cells extending in a predetermined direction are arranged next to one another via cell-dividing walls, where each of the cells are penetrating in the predetermined direction.
(3) The molded body formed in step (2) is sintered.
(4) Additional processing steps such as polishing and agglutination are performed.

In process step (1), the source powder material is preferably such a powder that grows columnar crystals by sintering, for example, a powder of α-type silicon nitride, or a mixed powder of α-type silicon nitride and β-type silicon nitride. The source powder material may also contain, as additional components, silicon carbide powder, boron nitride, and an oxide material such as cerium oxide and zirconium oxide.

The sintering aid can be a well-known material such as an oxide of a rare earth element (a lanthanoid element including yttrium), and it is preferable to use an oxide of yttrium (Y), ytterbium (Yb), erbium (Er), and the like. MgO, Al₂O₃, ZrO₂, HfO₂ and the like can be used. These sintering aids can be used alone, or in combination of two or more different aids. A compound of rare earth elements or alkaline earth elements (such as a carbonate), which become an oxide during the sintering, can also be used. A small amount of metallic Si can also be added.

In addition to the above-mentioned sintering aids, it is also effective to add the following materials as a part of the sintering aid: an aluminum compound such as aluminum nitride or aluminum oxide; and oxide or nitride of titanium, zirconium, or hafnium, and the like. Aluminum compounds contribute to strengthening the bonding power between silicon nitride crystalline particles. These aluminum compounds can be added as an oxide or nitride, or as a compound which turns into an oxide or nitride during the sintering.

A pore-forming agent can be included in the source material. Any conventional pore-forming material which melts or evaporates in the sintering step (3) can be used. That is, as a pore-forming agent makes pores when heated, such a pore-forming agent can form pores either by melting or by evaporating.

For example, resins such as polyethylene, polypropylene, polymethyl acrylate, polymethyl methacrylate, polyvinyl alcohol, polyphenol, paraffins; plant-based materials such as starch, nuts, walnut shell, and corn; carbon-based materials such as graphite and carbon fiber; and metallic balloons such as iron balloons can be used. When the pore-forming agent is a resin, it typically melts at a temperature between 100 °C and 500 °C, and a plant-based or carbon-based material is typically oxidized into carbon monoxide or carbon dioxide at about 400 °C, and then evaporates at about 800 °C.

The ratio of the pore-forming agent is preferably between 10 volume% and 60 volume%. If the pore-forming agent is less than 10 volume%, the amount of pores formed is reduced. If the pore-forming agent exceeds 60 volume%, it became difficult to obtain the pore-forming effect proportional to the amount of the agent used, resulting in unnecessary waste of the agent.

In the process step (3), the sintering may be performed in a non-oxidizing atmosphere by maintaining the temperature at about 1600∼1800 °C for a certain period of time (for example, about 1 hour to 3 hours).

### <Post Reaction Sintering>

On the other hand, the porous ceramic body lis also formed by a post reaction sintering employing process steps similar to process steps (1) ∼ (4) described above.

However, in process step (1), a metallic Si powder is used as a source powder material, which grows columnar crystals at an elevated temperature after it is nitrided. The sintering aid and the pore-forming agent are the same as those described in <Pressureless Sintering> .

In process step (3), after a degreasing process, the metallic Si is nitrided by sintering in a nitride atmosphere at 1000-1450 °C, and then densified by sintering at 1700∼1800 °C,.

Large pores are provided between the ceramic particles 1a using either of the above-described methods. The large pores become larger in the presence of the pore-forming agent, enhancing the air ventilation. Using a source powder material that grows columnar crystals, minute pores are formed between the columnar crystals on a surface of the ceramic particle 1a. By this, it is possible to manufacture the porous ceramic body 1 having a specific surface area equal to or greater than 0.5 m²/cc.

### <Method for Forming Coating Portion>

Next, the coating portion 2 is formed onto the porous ceramic body 1 by wash-coating. A method of forming the coating portion 2 is not limited to a specific method, but it can be a method using a slurry, colloid, and solution, which are referred to as a slurry method, colloid method, and solution method, respectively.

### <Slurry Method>

A slurry is made by mixing particles to be a source material for the coating portion 2 into a solvent such as water. The main component of the source material of the coating portion 2 is metal oxide, such as aluminum oxide, titanium oxide, zirconium oxide, silicon oxide, cerium oxide, lanthanum oxide, and the like. The porous ceramic body 1 is immersed into the slurry, or the slurry is poured onto the porous ceramic body 1. After that, an air blowing process and a heating process at a temperature about 500 °C are performed, whereby the solvent is evaporated so as to form the coating portion 2.

### <Colloid Method>

A colloidal solution is made by mixing particles to be a source material for the coating portion 2 into a solvent such as water, and controlling pH. The subsequent processes are the same as that in the slurry method.

### <Solution Method>

A solution is made by dissolving a source material to form the coating portion 2 by oxidation into a solvent such as water. For example, when the coating portion 2 of aluminum oxide is to be formed, aluminum nitrate and/or aluminum acetate may be used as the source material. Then, the porous ceramic body 1 is immersed into the solution, or the solution is applied onto the porous ceramic body 1. After that, an oxidation process is performed by heating at a temperature 600 °C or higher so as to form the coating portion 2.

As described above, the ceramic filer in accordance with one embodiment of the present invention includes the porous ceramic body which is a sintered body of ceramic particles, and the coating portion which is formed on a surface of each of the ceramic particles so as to support a catalyst. The porous ceramic body has a specific surface area equal to or greater than 0.5 m²/cc measured by a mercury porosimeter, and the amount of the coating portion is equal to or greater than 15g/l. Here, the amount of the coating portion is a weight thereof with respect to an apparent volume of the entire ceramic filter including air passages and pores through which an exhaust gas flows.

In accordance with the structure mentioned above, due to the specific surface area equal to or greater than 0.5 m²/cc, the surface area for forming the coating portion per unit volume is increased. And the coating portion is formed on that large specific surface area by the amount equal to or greater than 15g/l. The catalyst is dispersedly supported by the coating portion which is thus formed on a large area per unit volume. As a result, the dispersion of the catalyst can be improved, and whereby the agglomeration of the catalyst is suppressed even under the use at a high temperature, so as to maintain the catalyst performance for a long period of time.

In addition, in the ceramic filter of the present invention, it is preferable that in the porous ceramic body, pores having a pore diameter equal to or smaller than 10µm are equal to or greater than 10% of the entire pores.

In accordance with this structure, the small pores having the pore diameter equal to or smaller than 10µm generally have small contribution to the ventilation characteristic of the exhaust gas. On the other hand, the coating portion easily fills the small pores well, since the source powder material thereof is typically made in a form of liquid such as slurry, colloid, or solution and applied to the surface of each of the ceramic particles. Accordingly, although the coating portion is formed with such an amount of equal to or greater than 15g/l, it is disposed onto the small pores having a small contribution to the ventilation characteristic, and thus it is possible to prevent the pressure loss increase due to the clogging of the large pores having the pore diameter equal to or greater than 10µm.

Furthermore, in the ceramic filter of the present invention, it is preferable that an increase rate of the pressure loss after forming the coating portion is equal to or less than 20 % , compared with the pressure loss before the formation of the coating portion. According to this structure, decrease in the ventilation characteristic is suppressed.

In addition, in the ceramic filter of the present invention, it is preferable that in the porous ceramic body, pores having a pore diameter equal to or smaller than 10µm are equal to or smaller than 50% of the entire pores. According to this structure, decrease in the strength of the ceramic filter is suppressed.

The coating portion has a metal oxide as a main component, and for example, includes at least one element selected from the group consisting of aluminum oxide, titanium oxide, zirconium oxide, silicon oxide, cerium oxide, and lanthanum oxide.

The porous ceramic body includes, as the ceramic particles, a number of crystalline lumps formed of columnar crystals, where the crystalline lumps are coupled to each other. The porous ceramic body is made of a silicon nitride series ceramic, for example.

The present invention is not limited to the embodiments described above, but various modifications may be employed within the scope of the claims. That is, the technical scope of the present invention encompasses embodiments that are obtained by combining technical means that are modified within the scope of the claims.

### Embodiments

### <Embodiments 1∼4>

The source material is prepared with 48 weight% of metallic silicon (Si), 1.3 weight% of zirconium dioxide (ZrO₂), 1.3 weight% of alumina-magnesia-spinel (MgAl₂O₄), 25 weight% of β-type silicon nitride (β-Si₃N₄), 13 weight% of a pore-forming agent, and 11.4 weight% of other binders, and the porous ceramic body 1 is manufactured by the following process steps. The metallic silicon having a particle diameter of about 50∼100µm and the β-type silicon nitride having a particle diameter of about 100µm are used.
1. The above-mentioned source materials are mixed and kneaded.
2. A honeycomb-shaped cylinder body is formed using an extruder.
3. After a degreasing process, a reaction sintering is performed. The firing temperature is 1400 °C for the first firing, and 1700 °C for the second firing.
4. Additional processing such as polishing and agglutination are performed.

After that, aluminum nitrate which is a source material to form the coating portion 2 is dissolved into water and then applied onto the porous ceramic body 1. Then, a heating process is performed at a temperature 600 °C so as to form the coating portion 2. The amount of the coating portion 2 is 15 g/l in Embodiment 1, 20 g/l in Embodiment 2, 40 g/l in Embodiment 3, and 60 g/l in Embodiment 4.

Then, as the final step, platinum (Pt) particles which are the catalyst are disposed so as to be supported by the coating portion 2. More specifically, Pt dinitrodiammine nitric acid solution containing a desired amount of platinum is impregnated into the coating portion 2 to be supported, a drying process is performed at 120 °C, and then a firing process is performed in the air at 500 °C for an hour, whereby Pt particles having a particle diameter of 1∼5 nm are dispersedly supported on the surface of the coating portion 2.

### <Embodiment 5>

The ceramic filter in accordance with Embodiment 5 is manufactured in the same manner as that of Embodiment 3 except that the source material contains 7 weight% of the pore-forming agent and the second firing temperature is 1600 °C.

### <Embodiment 6>

The ceramic filter in accordance with Embodiment 6 is manufactured in the same manner as that of Embodiment 3 except that the metallic silicon has a minute particle diameter equal to or less than 50 µm, the β-type silicon nitride ceramic has a particle diameter equal to or less than 550 µm, and the source material contains 20 weight% of the pore-forming agent.

### <Embodiment 7>

The ceramic filter in accordance with Embodiment 7 is manufactured in the same manner as that of Embodiment 3 except that titanium isopropoxide dissolved into isopropyl alcohol, instead of aluminum nitrate dissolved into water, is used as the source material for the coating portion 2.

### <Comparative Examples 1∼3>

The source material is prepared with 70 weight% of silicon carbide (SiC) powder, 10 weight% of a binder, and 20 weight% of water, and a porous ceramic body 10 is manufactured by the following process steps.
1. The above-mentioned source materials are mixed and kneaded.
2. A honeycomb-shaped cylinder body is formed using an extruder.
3. After a degreasing process, a sintering is performed at 2200 °C.
4. Additional processing such as polishing and agglutination are performed.

After that, aluminum nitrate which is a source material for the coating portion 20 is dissolved into water and then applied onto the porous ceramic body 10. The amount of the coating portion 20 is 20 g/l in Comparative Example 1, 40 g/l in Comparative Example 2, and 60 g/l in Comparative Example 3.

Then, as the final step, platinum (Pt) particles which are the catalyst are disposed so as to be supported by the coating portion 20.

Table 1 shows evaluation results for Embodiments 1∼7 and Comparative Examples 1∼3 with respect to a specific surface area, a porosity ratio which is a volume ratio of the pores having a pore diameter equal to or less than 10 µm with respect to the entire pores, a coating amount, an amount of Pt, an increase rate of the pressure loss, and the dispersion of Pt.

**Table 1**

| No. | Source Material | Specific Surface Area m²/cc | Porosity Ratio of Pores equal to or less than 10 µm % | Coating Material | Coating Amount g/L | Amount of Pt | Increase Rate of Pressure Loss % |
|---|---|---|---|---|---|---|---|
| Example 1 | Silicon Nitride | 2.3 | 30 | Aluminum Oxide | 15 | 0.40% | 0.1 |
| Example 2 | Silicon Nitride | 2.3 | 30 | Aluminum Oxide | 20 | 0.40% | 0.5 |
| Example 3 | Silicon Nitride | 2.3 | 30 | Aluminum Oxide | 40 | 0.40% | 0.1 |
| Example 4 | Silicon Nitride | 2.3 | 30 | Aluminum Oxide | 60 | 0.40% | 3.6 |
| Example 5 | Silicon Nitride | 0.5 | 10 | Aluminum Oxide | 40 | 0.40% | 5.2 |
| Example 6 | Silicon Nitride | 2.5 | 50 | Aluminum Oxide | 40 | 0.40% | 0.1 |
| Example 7 | Silicon Nitride | 2.3 | 30 | Titanium Oxide | 40 | 0.40% | 0.2 |
| Comparative Example 1 | Silicon Carbide | 0.2 | 10 | Aluminum Oxide | 20 | 0.40% | 2.0 |
| Comparative Example 2 | Silicon Carbide | 0.2 | 10 | Aluminum Oxide | 40 | 0.40% | 9.3 |
| Comparative Example 3 | Silicon Carbide | 0.2 | 10 | Aluminum Oxide | 60 | 0.40% | 16.3 |

### <Specific Surface Area>

The specific surface area of the porous ceramic body before forming the coating portion, measured by a mercury porosimeter, is 0.5 m²/cc in Embodiment 5, 2.3 m²/cc in Embodiments 1∼4 and 7, 2.5 m²/cc in Embodiment 6, and 0.2 m²/cc in the Comparative Examples, as shown in Table 1.

### <Pore Diameter Distribution>

The pore diameter distribution was measured using a mercury intrusion technique for the porous ceramic body before forming the coating portion.

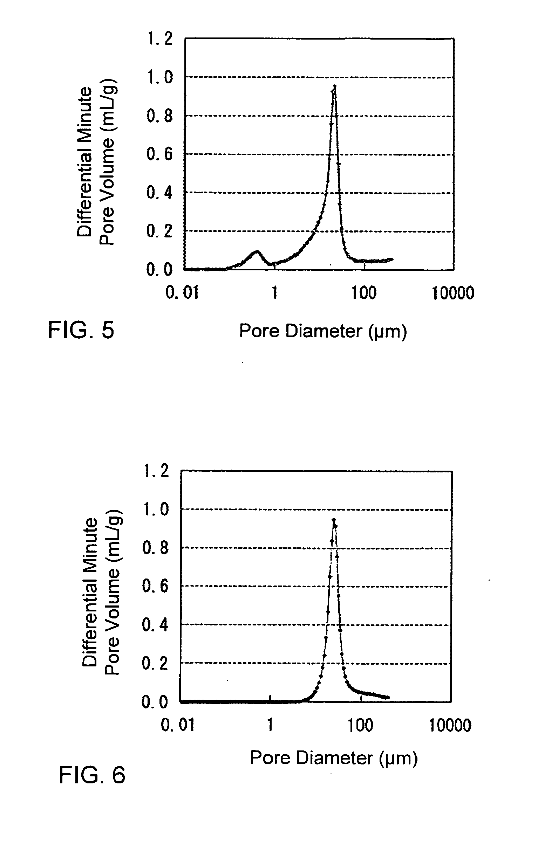

FIG. 5 is a diagram showing measurement results of the pore diameter distribution for the porous ceramic body 1 in Embodiments 1∼4 and 7. FIG. 6 is a diagram showing measurement results of the pore diameter distribution for the porous ceramic body 10 in the Comparative Examples 1∼3.

As shown in FIGS. 5 and 6, all of Comparative Examples 1∼3 and Embodiments 1∼4 and 7 have a peak at the pore diameter greater than 10 µm. This peak is attributed to the large pores between the ceramic particles.

On the other hand, while Comparative Examples 1∼3 have little or no pores having the pore diameter equal to or less than 10µm, Embodiments 1∼4 and 7 shows existence of small pores having the pore diameter equal to or less than 10µm. Thus is because in the Embodiments, the ceramic particles are in a form of crystalline lumps which are masses of columnar crystals, providing numerous minute pores formed between the columnar crystals.

As shown in Table 1, in the Embodiments, the ratio of the pores having the pore diameter equal to or smaller than 10µm is equal to or greater than 10 volume% with respect to the entire pores. More specifically, in Embodiments 1∼4, 6, and 7, the ratio is equal to or greater than 30 volume%, demonstrating that the Embodiments have the higher ratio of the pores having the pore diameter equal to or smaller than 10µm, compared with Comparative Examples 1 -3. The porosity with respect to the entire volume is 64.6% in Embodiments 1∼4, and 48.0% in Comparative Examples 1-3. This is because the Embodiments presumably have more pores due to the additional minute pores.

By forming the coating portion on such a porous ceramic body, in the Embodiments, the coating portion fills the minute pores between the columnar crystals as shown in FIG. 1, so as to prevent the pressure loss from increasing. However, in the Comparative Examples, the pressure loss is tend to be increased since the coating portion is formed so as to block the large pores between the ceramic particles, as shown in FIG. 2.

The pore diameter distribution is also measured for the porous ceramic body provided with the coating portion using the mercury intrusion technique. It is confirmed that the amount of pores having the pore diameter equal to or greater than 10 µm is significantly reduced in the Comparative Examples, while the amount of pores mainly having the pore diameter equal to or smaller than 10 µm is significantly reduced in the Embodiments. Also, in some cases, the amount of pores having the pore diameter equal to or smaller than 10 µm is increased by forming the coating portion. This is because γ-alumina particles constituting the coating portion have a large specific surface area and minute pores.

### <Dispersibility of Coating Portion>

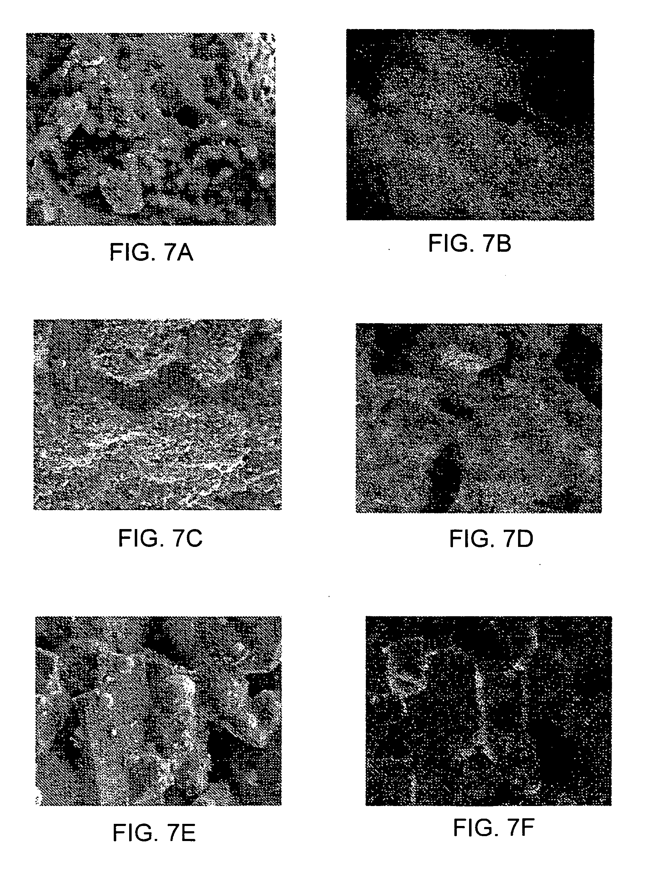

The mapping of element Al forming the coating portion is examined for Embodiments 2 and 4 and Comparative Example 1. FIG. 7A is an electron micrograph of Embodiment 2, FIG. 7B is an EDX map for element Al in Embodiment 2, FIG. 7C is an electron micrograph of Embodiment 4, FIG. 7D is an EDX map for element Al in Embodiment 4, FIG. 7E is an electron micrograph of Comparative Example 1, and FIG. 7F is an EDX map for element Al in Comparative Example 1.

As shown in FIG. 7, it is confirmed that, compared with the Comparative Examples, the Embodiments have a higher dispersibility of element Al. This means that the coating portion has a higher dispersibility in the Embodiments. This is because the Embodiments have a larger specific surface area and a large number of minute pores having the pore diameter equal to or less than 10 µm are dispersed such that the coating portion filling the minute pores is uniformly dispersed.

As such, since the coating portion has a high dispersibility, the catalyst supported by the coating portion also has a high dispersibility.

### <Increase Rate of Pressure Loss>

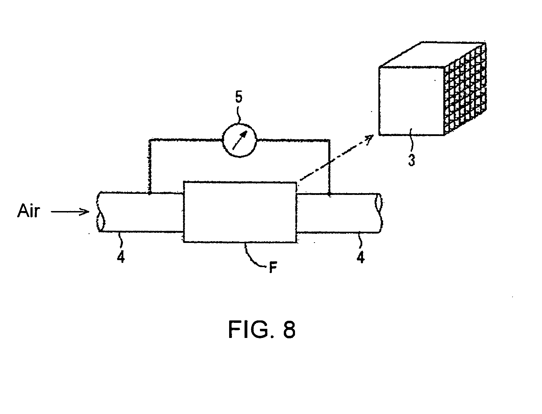

The pressure loss is measured by an experimenting device as shown in FIG. 8. That is, a honeycomb filter F is formed into a honeycomb test sample 3 having 35 x 35 x 150 mm dimensions, 260 cpsi cell density, and 10 mil wall thickness, and is disposed in a ventilation passage 4, and a pressure loss (kPa) which is a pressure difference between before and after the honeycomb filter F is measured using a differential pressure gage 5 by flowing air through the ventilation passage 4. The increase rate of the pressure loss due to forming the coating portion is calculated by measuring the pressure loss for both of the honeycomb filter before forming the coating portion and the honeycomb filter after forming the coating portion.

As shown in Table 1, it is confirmed that the increase rate of the pressure loss is suppressed at a low level in accordance with the Embodiments. If the increase rate of the pressure loss is to be suppressed within 20%, about 70g/l of coating portion can be formed according to the Embodiments.

### Industrial Applicability

The present invention can be used for a filter to capture solid particles in an exhaust gas from an internal combustion engine and the like.

### Explanation of Reference Numerals

- 1:: porous ceramic body
- 1a:: ceramic particle
- 2:: coating portion

## Claims

1. A ceramic filter comprising:
a porous ceramic body which is a sintered body of ceramic particles; and
a coating portion formed on a surface of each of the ceramic particles to support a catalyst,
wherein the porous ceramic body has a specific surface area equal to or greater than 0.5 m²/cc, measured by a mercury porosimeter, and an amount of the coating portion is equal to or greater than 15g/l.

2. The ceramic filter of claim 1, wherein in the porous ceramic body, pores having a pore diameter equal to or smaller than 10µm are equal to or greater than 10% of entire pores.

3. The ceramic filter of claim 1 or 2, wherein an increase rate of a pressure loss after forming the coating portion is equal to or less than 20 % compared with the pressure loss before the formation of the coating portion.

4. The ceramic filter of any one of claims 1-3, wherein in the porous ceramic body, pores having a pore diameter equal to or smaller than 10µm are equal to or smaller than 50 % of entire pores.

5. The ceramic filter of any one of claims 1-4, wherein the coating portion contains at least one element selected from the group consisting of aluminum oxide, titanium oxide, zirconium oxide, silicon oxide, cerium oxide, and lanthanum oxide.

6. The ceramic filter of any one of claims 1-5, wherein the porous ceramic body includes a number of crystalline lumps of columnar crystals as the ceramic particles, the crystalline lumps being coupled to each other.

7. The ceramic filter of any one of claims 1-6, wherein the porous ceramic body is made of a silicon nitride series ceramic.
